# EUROPÄISCHE PATENTSCHRIFT

(11) **EP 3 433 206 B1**
(45) Veröffentlichungstag und Bekanntmachung des Hinweises auf die Patenterteilung: **13.07.2022**
(21) Anmeldenummer: 17712960.8
(22) Anmeldetag: 22.03.2017
(51) Int. Cl.: B67C 3/24, B67C 7/00, B65G 47/86, B65G 47/90

(54) **HALTEVORRICHTUNG ZUM HALTEN EINES BEHÄLTERS**
HOLDING DEVICE FOR HOLDING A CONTAINER
DISPOSITIF DE RETENUE POUR MAINTENIR UN RÉCIPIENT

(30) Priorität: 22.03.2016 DE 102016105265
(43) Veröffentlichungstag der Anmeldung: 30.01.2019
(73) Patentinhaber: KRONES AG, 93073 Neutraubling (DE)
(72) Erfinder: LANDLER, Bruno, 93073 Neutraubling (DE); KRAUS, Matthias, 93073 Neutraubling (DE)
(74) Vertreter: Nordmeyer, Philipp Werner
(86) Internationale Anmeldenummer: PCT/EP2017/056762
(87) Internationale Veröffentlichungsnummer: WO 2017/162710

(56) Entgegenhaltungen:
- WO-A1-2009/118579
- DE-A1-102012 218 204
- DE-B3-102014 116 004
- JP-A- 2001 287 795
- US-A1- 2014 319 301

## Beschreibung

### Technisches Gebiet

Die vorliegende Erfindung betrifft eine Haltevorrichtung zum Halten eines Behälters an einer Transportvorrichtung in einer Getränkeabfüllanlage.

### Hintergrund der Erfindung

Haltevorrichtungen zum Halten von Behältern in Getränkeabfüllanlagen sind aus dem Stand der Technik bekannt. Dabei wird prinzipiell unterschieden zwischen Haltevorrichtungen, welche den Behälter in seinem Bodenbereich unterstützen, hier wird auch von "base handling" gesprochen. Weiterhin sind Haltevorrichtungen bekannt, welche den Behälter in seinem Halsbereich halten, beispielsweise unter einem Halsring angreifen - hier wird auch von "neck handling" gesprochen. Beim Halten der Behälter im Halsbereich wird der zu haltende Behälter beispielsweise durch beweglich beziehungsweise schwenkbar angeordnete Greifarme gehalten. Die Greifarme werden dabei durch Aktuatoren, beispielsweise Pneumatikzylinder oder elektrische Aktuatoren, oder durch eine mechanische Führung aktiv angesteuert - also geöffnet und geschlossen.

Haltevorrichtungen zum Halten eines Behälters sind dabei zumeist an bewegten Teilen von Behältertransportvorrichtungen angeordnet, welche zumindest zum Bewegen beziehungsweise Transportieren des Behälters dienen. Daher sind aufwendige Kontaktierungen zwischen stehenden und sich bewegenden Teilen der Behältertransportvorrichtung vorzusehen, um eine aktive Ansteuerung der Greifarme zu ermöglichen, was die Komplexität sowie die Fertigungs- und Betriebskosten solcher Behältertransportvorrichtungen erhöht.

Es ist ferner bekannt, Greifer beziehungsweise deren Greifarme durch das Einbringen eines Werkstücks in den geschlossenen Zustand zu bringen, wobei das Werkstück beim Einführen in die Haltevorrichtung auf einen Aktuator drückt und so die Greifarme geschlossen werden. Wie der DE Geänderte Beschreibungsseite auf Mitteilung nach Regel 161(1) und 162 EPÜ 10 2008 020 489 A1 und der DE 38 02 838 A1 zu entnehmen, sind solche Haltevorrichtung mechanisch komplex und aufwendig aufgebaut und bestehen aus einer Vielzahl von Teilen.

Aus der DE 10 2012 218 204 A1 ist eine einteilige Klammer zum Greifen von Behältern bekannt.

Die Klammer weist dabei eine feste Position auf. Zum Greifen eines Behälters muss dieser in die Klammer gedrückt werden. Dabei werden die steifen Greifarme nach außen gespreizt, so dass der Behälter gegen die aufgrund des Spreizens der Klammer entstehende Schließkraft der Greifarme bewegt werden muss. Hierdurch wird der Behälter beim Einschieben mit einer hohen Kraft beaufschlagt, so dass solche Haltevorrichtungen zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt ist.

Die DE 10 2014 116 004 B3 beschreibt eine Behälterklammer zum Halten und Führen von Behältern.

Sowohl die DE 10 2012 218 A1 als auch die DE 10 2014 116 004 B3 offenbart eine Haltevorrichtung gemäß dem Oberbegriff des Anspruchs 1.

### Darstellung der Erfindung

Ausgehend von dem bekannten Stand der Technik ist es eine Aufgabe der vorliegenden Erfindung, eine verbesserte Haltevorrichtung zum Halten eines Behälters an einer Transportvorrichtung in einer Getränkeabfüllanlage bereitzustellen.

Die Aufgabe wird durch eine Haltevorrichtung zum Halten eines Behälters in einer

Getränkeabfüllanlage, mit den Merkmalen des Anspruchs 1 gelöst. Vorteilhafte Weiterbildungen ergeben sich aus den Unteransprüchen.

Entsprechend wird Haltevorrichtung zum Halten eines Behälters in einer Transportvorrichtung einer Getränkeabfüllanlage vorgeschlagen, umfassend ein Befestigungsteil und zwei verschwenkbar an dem Befestigungsteil angebundene Greifarme, welche zum Halten des Behälters in eine geschlossenen Position bringbar sind und welche zum Einführen und Entnehmen des Behälters in eine geöffnete Position bringbar sind, wobei zwischen den Greifarmen ein vorgespannter elastischer Bügel angeordnet ist und der elastische Bügel in eine erste Lage, in welcher sich die Greifarme in der geöffneten Position befinden, und in eine zweite Lage, in welcher sich die Greifarme in der geschlossenen Position befinden, bringbar ist. Erfindungsgemäß hält die Vorspannung des elastischen Bügels in der ersten Lage die Greifarme in der geöffneten Position und die Vorspannung des elastischen Bügels hält in der zweiten Lage die Greifarme in der geschlossenen Position.

Dadurch, dass die Vorspannung des Bügels in der ersten Lage die Greifarme in der geöffneten Position hält und die Vorspannung des Bügels in der zweiten Lage die Greifarme in der geschlossenen Position hält, kann, wenn die Greifarme in der geöffneten Position gehalten werden, ein sicheres Einführen eines zu haltenden Behälters beziehungsweise ein sicheres Ausführen eines zu entnehmenden Behälters aus der Haltevorrichtung ermöglicht werden und zudem kann ein selbstständiges Halten des zu haltenden Behälters durch die Haltevorrichtung erfolgen, wenn die Greifarme in der geschlossenen Position gehalten werden, ohne, dass hierfür gesonderte separate Verriegelungseinrichtungen zum Halten der Greifarme in der geöffneten und/oder der geschlossenen Position an der Haltevorrichtung vorzusehen sind. Weiterhin kann auf zusätzliche Vorrichtungen zum Steuern der Lage der Greifarme verzichtet werden. Insbesondere kann auf Ansteuerelemente, Aktuatoreinheiten und Steuervorrichtungen und deren aktiver Ansteuerung verzichtet werden. Die Haltevorrichtung kann somit besonders einfach und/oder mit einem geringen Gewicht aufgebaut sein und entsprechend kostengünstig hergestellt werden. Durch das Fehlen von Verbindungsbereichen zwischen den Ansteuerelementen und den Greifarmen liegen auch keine schwer zu reinigenden Spalte oder Ritzen vor, in welchen sich Verunreinigungen festsetzen können. Die Haltevorrichtung kann daher ferner besonders leicht gereinigt werden. Folglich kann sie auch für Anwendungen mit hohen Anforderungen an die Hygiene, wie der Lebensmittelproduktion oder der Pharmazeutika-Produktion, verwendet werden.

Darüber hinaus kann ein äußerst sanftes, bevorzugt nahezu kraftloses Übergeben und Übernehmen eines zu haltenden Behälters erfolgen, da der Behälter nicht gegen die Vorspannung von permanent in der geschlossenen Position gehaltenen Greifarmen in die Haltevorrichtung hinein gedrückt beziehungsweise aus dieser hinaus gezogen werden muss. Vielmehr kann der zu greifende Behälter in die Vorrichtung bewegt werden, wenn die Vorspannung des Bügels in der ersten Lage die Greifarme in der geöffneten Position hält, und der in die Vorrichtung bewegte Behälter gegriffen beziehungsweise gehalten werden, wenn die Vorspannung des Bügels in der zweiten Lage die Greifarme in der geschlossenen Position hält.

Ferner kann durch den Einsatz einer erfindungsgemäßen Haltevorrichtung an einer die Haltevorrichtung aufweisende Transport- und/oder Behandlungsvorrichtung zum Transportieren und/oder Behandeln eines Behälters solch eine Transport- oder Behandlungsvorrichtung einfach aufgebaut sein und kostenextensiv betrieben werden, da zum einen die zu bewegenden Massen an der Transport- und/oder Behandlungsvorrichtung gering gehalten werden und zum anderen auf aufwendige Kontaktierungen, insbesondere zum Steuern der Greifarme, wie elektrische oder optische Verkabelungen und/oder pneumatische Verschlauchungen, verzichtet werden kann.

In einer weiteren bevorzugten Ausführungsform sind die erste und die zweite Lage stabile Lagen, wobei der elastische Bügel bei einer elastischen Verformung aus einer der beiden Lagen in Richtung der jeweils anderen Lage bei einem Überschreiten eines bestimmten Umschwenk-Verformungsgrads selbstständig in die jeweils andere Lage gelangt. Dadurch kann eine selbstschaltende, bevorzugt selbstöffnende und/oder selbstschließende, Haltevorrichtung bereitgestellt werden. Mit anderen Worten wird hierdurch eine passive Haltevorrichtung ausgebildet, bei welcher nicht durch eine aktive Aktuatorvorrichtung zwischen der geöffneten Position und der geschlossenen Position der Greifarme gewechselt wird. Zudem werden die Greifarme durch die jeweilige stabile Lage des elastischen Bügels jeweils stabil in der geöffneten beziehungsweise geschlossenen Position gehalten, ohne dass Verriegelungseinrichtungen oder ähnliches notwendig sind. Der elastische Bügel fungiert somit im Sinne einer elastischen Schnappfeder, welche zwischen zwei stabilen Lagen wechseln kann.

Damit der elastische Bügel elastische Eigenschaften aufweist, umfasst zumindest der elastische Bügel ein elastisches, bevorzugt hochelastisches, Material, bevorzugt einen Kunststoff oder eine Metalllegierung.

Um ein besonders sicheres Halten der Greifarme in der geöffneten sowie der geschlossenen Position zu ermöglichen, ist in einer bevorzugten Ausführungsform der elastische Bügel in der ersten Lage in einer ersten Vorspannrichtung vorgespannt ist und in der zweiten Lage in einer zweiten Vorspannrichtung vorgespannt ist, wobei die erste Vorspannrichtung und die zweite Vorspannrichtung im Wesentlichen in entgegengesetzte Richtungen weisen.

In einer weiteren bevorzugten Ausgestaltung ist der elastische Bügel in Form einer Feder, bevorzugt einer Schnappfeder, besonders bevorzugt einer Blattfeder, bereitgestellt. Dadurch kann der elastische Bügel in der ersten und/oder der zweiten Lage eine hohe Vorspannung aufweisen, so dass die Greifarme sicher in der geöffneten beziehungsweise in der geschlossenen Position gehalten werden. Zudem ist dann zum Bewegen des elastischen Bügels aus der ersten Lage in die zweite Lage und umgekehrt lediglich ein geringer Kraftaufwand notwendig. Ferner ist der Bügel hierdurch besonders einfach und kostengünstig herstellbar.

Damit der elastische Bügel die erste Lage und die zweite Lage einnehmen kann beziehungsweise zwischen diesen bewegbar und/oder elastische verformbar ist, ist in einer bevorzugten weiteren Ausführungsform jeweils ein Anbindungsbereich zwischen dem Befestigungsteil und jeweils einem Greifarm vorgesehen, wobei der Anbindungsbereich Teil des elastischen Bügels ist. Mit anderen Worten ist der elastischen Bügel dann aus den zwei Anbindungsbereichen und einem Mittelbügel ausgebildet.

In einer vorteilhaften bevorzugten Weiterbildung ist der Anbindungsbereich zwischen dem Befestigungsteil und einem Greifarm jeweils über einen biegeweichen Steg, bevorzugt in Form eines Filmgelenks bereitgestellt. Hierdurch kann eine gute Beweglichkeit des elastischen Bügels ermöglicht werden. Zudem können die Stege dazu durch eine Vorspannung der Stege aufgrund einer eigenen elastischen Verformung einerseits zur Vorspannung des Bügels beitragen und andererseits dazu beitragen, den elastischen Bügel stabil in der ersten und/oder der zweiten Lage zu positionieren. Für eine besonders einfache Fertigung und/oder, um ein besonders gleichmäßiges elastisches Verformen des Anbindungsbereichs und des Bügels bereitzustellen, weisen diese bevorzugt das gleiche Material auf und sind bevorzugt einstückig ausgebildet.

Besonders vorteilhaft kann es sein, wenn der elastische Bügel mit den Anbindungsbereichen und dem Befestigungsteil einen Rahmen ausbildet, bevorzugt einen durchgehenden Rahmen, wobei bevorzugt eine durch den Rahmen gebildete Ausnehmung umschlossen ist.

In einer weiter bevorzugten Ausführungsform sind der Befestigungsteil, die Greifarme, die Anbindungsbereiche und der elastische Bügel einstückig ausgebildet. Dadurch kann die Haltevorrichtung besonders einfach und kostengünstig, bevorzugt in einem Fertigungsschritt, hergestellt werden. Zudem ist die Haltevorrichtung dann besonders leicht zu reinigen und somit ideal für Anwendungen mit hohen Hygieneanforderungen, wie Aspetikanlagen, geeignet.

Um eine besonders kostengünstige und effiziente Herstellung zu ermöglichen, ist die Haltevorrichtung bevorzugt in einem Fertigungsschritt hergestellt, bevorzugt mittels Spritzguss, selektiven Lasersintern, selektiven Laserschmelzen, Fräsen, Laser- oder Wasserstrahlschneiden, Stereolithografie oder Pulverspritzguss.

Für ein sicheres und genaues Positionieren und Halten des zu haltenden Behälters in der Haltevorrichtung kann der in der Haltevorrichtung gehaltene Behälter durch den elastischen Bügel und die zwei Greifarme gehalten sein, wobei bevorzugt der elastische Bügel und jeder der Greifarme jeweils genau einen Kontaktbereich mit dem gehaltenen Behälter ausbilden. Mit anderen Worten steht der gehaltene Behälter dann mit mindestens drei Kontaktbereichen mit der Haltevorrichtung in Kontakt. Alternativ können aber auch mehrere Kontaktbereiche zwischen dem gehaltenen Behälter und dem elastischen Bügel und/oder den Greifarmen vorgesehen sein oder der Behälter ist nur durch die zwei Greifarme gehalten, wobei dann der Behälter jeweils mindestens ein Kontaktbereich mit einem Greifarm ausbildet.

In einer weiteren bevorzugten Ausführungsform ist die elastische Verformung zum Verformen des elastischen Bügels aus der ersten Lage in die zweite Lage durch eine direkte Krafteinwirkung auf den elastischen Bügel bewirkbar. Bevorzugt wird die Kraft zum Verformen des elastischen Bügels aus der ersten Position durch den Behälter auf den elastischen Bügel aufgebracht. Dadurch kann die Position der Greifarme beim Übergeben des Behälters an die Haltevorrichtung aufgrund des Einführens des Behälters passiv in die geschlossene Position gebracht werden.

In einer bevorzugten Weiterbildung ist die elastische Verformung zum Verformen des elastischen Bügels aus der zweiten Lage in die erste Lage durch ein über die Greifarme auf den elastischen Bügel wirkendes Biegemoment bewirkbar. Bevorzugt wird das Biegemoment durch eine Krafteinwirkung des Behälters auf die Greifarme erzeugt, bevorzugt beim Entnehmen des Behälters aus der Haltevorrichtung. Die Greifarme können so passiv aus der geschlossenen Position in die geöffnete Position bewegt werden.

Ein besonders einfacher Aufbau der Haltevorrichtung kann dadurch ermöglicht werden, dass der zu haltende Behälter als Aktuator zum Wechseln zwischen der geschlossenen Position zum Halten des Behälters und der geöffneten Position zum Ein- und Ausführen eines Behälters dient, wobei der Behälter bevorzugt zum Schließen der Greifarme gegen den elastischen Bügel geschoben werden kann und zum Öffnen der Greifarme aus der Haltevorrichtung gezogen werden kann. Somit kann sichergestellt werden, dass der Behälter nach dem Einführen in die Haltevorrichtung sicher gehalten ist und sich die Haltevorrichtung öffnet und den Behälter freigibt, wenn der Behälter entnommen wird. Mit anderen Worten wird die Haltevorrichtung beziehungsweise die Position der Greifarme durch den Behälter, insbesondere durch das Einführen und Entnehmen des Behälters, gesteuert.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Haltevorrichtung zum Halten eines Behälters, bei welcher die Greifarme der Haltevorrichtung mittels eines elastischen Bügels in einer geöffneten Position gehalten werden;
- Figur 2: schematisch eine Draufsicht der Haltevorrichtung aus Figur 1; und
- Figur 3: schematisch eine Draufsicht der Haltevorrichtung aus Figur 1 in einem Zustand, in welchem die Greifarme mittels des elastischen Bügels in einer geschlossenen Position gehalten werden.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

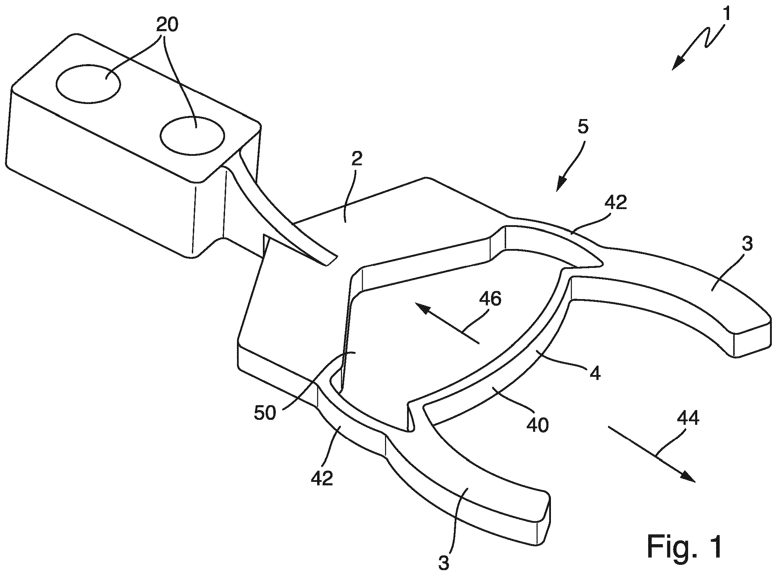

In Figur 1 ist schematisch eine perspektivische Seitenansicht einer Haltevorrichtung 1 zum Halten eines nicht gezeigten Behälters in einer Getränkeabfüllanlage gezeigt. Die Haltevorrichtung 1 dient beispielsweise dazu, den Behälter an seinem Halsbereich durch eine Getränkeabfüllvorrichtung zu transportieren und die Haltevorrichtung 1 kann beispielsweise an einem Transportstern, einem Rundläuferfüller und/oder einem Verschließer angeordnet sein, um hier die jeweils zu behandelnden beziehungsweise zu transportierenden Behälter zu halten beziehungsweise an eine nachfolgende Transport- oder Behandlungsvorrichtung zu übergeben.

Die Haltevorrichtung 1 weist zwei Greifarme 3 auf, welche zum eigentlichen Halten des Behälters vorgesehen sind und welche in einer geschlossenen Position den Behälter halten. Die Greifarme 3 sind an einem Befestigungsteil 2 verschwenkbar angebunden, so die Greifarme 3 aus einer geschlossenen Position, in der der Behälter gehalten ist, in eine geöffnete Position gebracht werden können, in der der Behälter aus der Haltevorrichtung 1 wieder entnommen werden kann und ein weiterer Behälter zur Aufnahme in der Haltevorrichtung 1 eingeführt werden kann. Das Befestigungsteil 2 weist Befestigungspunkte 20 zur Befestigung der Haltevorrichtung 1 an einer der genannten Transport- oder Behandlungsvorrichtungen der Getränkeabfüllvorrichtung auf.

Von den Befestigungspunkten 20 beabstandet schließen sich an das Befestigungsteil 2 zwei Anbindungsbereiche 42 in Form von dünnwandigen Stegen an. Die Anbindungsbereiche 42 können auch als Filmgelenk ausgebildet sein.

Über jeweils einen der Anbindungsbereiche 42 ist jeweils ein Greifarm 3 zum Greifen des zu haltenden Behälters mit dem Befestigungsteil 2 verbunden. Die als Stege ausgeführten Anbindungsbereiche 42 fungieren dabei als elastisches Gelenk, so dass die Greifarme 3 schwenkbar mit dem Befestigungsteil 2 verbunden sind. Zwischen den Greifarmen 3 ist ein elastischer Bügel 4 angeordnet. Dieser Bügel 4 ist als dünnwandiges Blattfederelement ausgebildet und befindet sich in einem in Richtung einer ersten Vorspannrichtung 44 vorgespannten Zustand in einer ersten stabilen Lage. Durch die Lage des Bügels 4 ist die Position der Greifarme 3 vorgegeben. Da sich der Bügel 4 in der ersten stabilen Lage befindet, befinden sich die Greifarme 3 in der geöffneten Position zum Einführen und Entnehmen des Behälters.

In der in Figur 1 gezeigten Ausführungsform fungieren die Anbindungsbereiche 42 als Teil des Bügels 4, so dass sich dieser Bügel 4 aus den Anbindungsbereichen 42 und einem Mittelbügel 40 zusammensetzt. Die Anbindungsbereiche 42 und der Mittelbügel 40 weisen im Wesentlichen die gleichen Querschnittsflächen auf.

Der Bügel 4 bildet mit den Anbindungsbereichen 42 und dem Befestigungsteil 2 ferner einen Rahmen 5 aus, so dass durch den Rahmen 5 eine Ausnehmung 50 umschlossen ist. Durch diese Rahmenform ist eine gute elastische Verformbarkeit des Bügels 4 ermöglicht und gleichzeitig kann eine stabile Halterung zum Transport des zu transportierenden Behälters bereitgestellt werden.

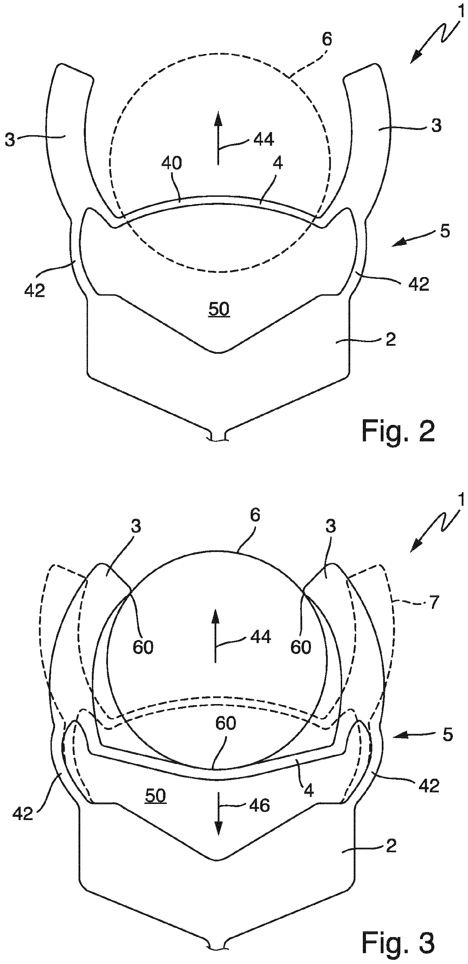

Figur 2 ist schematisch eine Draufsicht auf die Haltevorrichtung 1 der Figur 1 zu entnehmen. Der Bügel 4 befindet sich auch in dieser Darstellung in der ersten stabilen Lage. Der Mittelbügel 40 ist dabei in Richtung der ersten Vorspannrichtung 44 gewölbt. Dadurch sind die an den Bügel 4 anschließenden Greifarme 3 voneinander weg bewegt gehalten, so dass deren Abstand zueinander größer ist, als der Durchmesser eines zu haltenden Behälters 6. Dieser ist für eine bessere Übersicht schematisch in einer Position angedeutet, welche er in einem geschlossenen Zustand der Haltevorrichtung 1 einnehmen würde. Da der Durchmesser des zu haltenden Behälters 6 kleiner ist, als der Abstand der zwei Greifarme 3 zueinander, kann der Behälter 6 in die Haltevorrichtung 1 eingeführt oder aus dieser entnommen werden, ohne einen Widerstand an den Greifarmen 3 zu erfahren.

Figur 3 zeigt schematisch eine Draufsicht der Haltevorrichtung 1 aus den Figuren 1 und 2 in einem Zustand, in welchem sich die Greifarme 3 in einer geschlossenen Position befinden. Der elastische Bügel 4 ist dabei in Richtung der zweiten Vorspannrichtung 46, welche zur ersten Vorspannrichtung 44 gesehen in entgegengesetzte Richtung weist, in einer zweiten stabilen Lage vorgespannt.

Der Mittelbügel 40 ist hier in Richtung der zweiten Vorspannrichtung 46 gewölbt. Ein durch die Haltevorrichtung 1 gehaltener Behälter 6 wird dabei durch die Greifarme 3 und den elastischen Bügel 4 gehalten. Der Behälter 6 bildet hierbei mit den Greifarmen 3 sowie dem elastischen Bügel 4 Kontaktbereiche 60 aus. Bevorzugt sind genau drei Kontaktbereiche 60 vorgesehen, nämlich jeweils ein Kontaktbereich 60 mit jedem Greifarm 3 und ein Kontaktbereich 60 mit dem Mittelbügel 40 vorgesehen. Auf diese Weise können definierte Kontaktbereiche 60 ausgebildet werden, die dann sowohl zu einem definierten Halteverhalten für den Behälter führen, als auch ein definiertes Einführen und Herausnehmen erreichen.

Alternativ kann der Behälter 6 auch nur durch die zwei Greifarme 3 gehalten werden, welche dann entsprechend zwei Kontaktbereiche 60 ausbilden.

Für eine bessere Vergleichbarkeit zwischen der ersten Lage des Bügels 4 und der zweiten Lage des Bügels 4 und der daraus vorgegebenen jeweiligen Positionen der Greifarme 3, ist durch die gestrichelte Linie 7 die Haltevorrichtung 1 in der in Figur 2 gezeigten geöffneten Position schematisch in Figur 3 dargestellt.

Zum Wechseln von der in Figur 2 gezeigten, geöffneten Position der Greifarme 3 in die in Figur 3 gezeigte, geschlossene Position der Greifarme 3 ist der elastische Bügel 4 aus der ersten Lage in die zweite Lage zu bringen. Bei einer Krafteinwirkung in Richtung der zweiten Vorspannrichtung 46 auf den elastischen Bügel 4 wird dieser in Richtung der zweiten Vorspannrichtung 46 elastisch verformt. Wenn der elastische Bügel 4 einen bestimmten Umschwenk-Verformungsgrad erreicht hat, schnappt dieser selbstständig in die zweite stabile Lage um. Die Krafteinwirkung auf den elastischen Bügel 4 kann dabei bevorzugt direkt über den eingeschobenen Behälter 6 aufgebracht werden. Dieser drückt beim Einschieben in die Haltevorrichtung 1 den Bügel 4 in Richtung der zweiten Verformungsrichtung 46, so dass der elastische Bügel 4 eine elastische Verformung erfährt und nach Überschreiten des Umschwenk-Verformungsgrads in die zweite stabile Lage schnappt.

Zum Wechseln aus der in Figur 3 gezeigten, geschlossenen Position der Greifarme 3 in die in Figur 2 gezeigte, geöffnete Position der Greifarme 3 ist der elastische Bügel 4 aus der zweiten Lage in die erste Lage zu bringen. Bei einer Krafteinwirkung in Richtung der ersten Vorspannrichtung 44 auf den elastischen Bügel 4 wird dieser in Richtung der ersten Vorspannrichtung 44 elastisch verformt. Wenn der elastische Bügel 4 den bestimmten Umschwenk-Verformungsgrad erreicht hat, schnappt dieser wiederum selbstständig in die erste stabile Lage um. Die Krafteinwirkung auf den elastischen Bügel 4 kann dabei bevorzugt durch ein über die Greifarme 3 auf den Bügel 4 wirkendes, durch ein Herausziehen des Behälters 6 aus der Haltevorrichtung 1 erzeugtes Biegemoment aufgebracht werden. Der zu entnehmende Behälter 6 drückt bei seiner Entnahme die zwei Greifarme 3 auseinander. Die so auseinandergedrückten Greifarme 3 wirken dadurch als Hebelarme auf den elastischen Bügel 4, so dass dieser ein Biegemoment und hierdurch eine elastische Verformung in Richtung der ersten Vorspannrichtung 44 erfährt und nach Überschreiten des Umschwenk-Verformungsgrads in die zweite stabile Lage schnappt.

Der elastische Bügel 4 fungiert somit im Sinne einer elastischen Schnappfeder, welche zwischen zwei stabilen Lagen wechseln kann.

### Bezuaszeichenliste

- 1: Haltevorrichtung
- 2: Befestigungsteil
- 20: Befestigungspunkt
- 3: Greifarm
- 4: elastischer Bügel
- 40: Mittelbügel
- 42: Anbindungsbereich
- 44: erste Vorspannrichtung
- 46: zweite Vorspannrichtung
- 5: Rahmen
- 50: Ausnehmung
- 6: Behälter
- 60: Kontaktbereich
- 7: gestrichelte Linie

## Patentansprüche

1. Haltevorrichtung (1) zum Halten eines Behälters (6) in einer Transportvorrichtung einer Getränkeabfüllanlage, umfassend ein Befestigungsteil (2) und zwei verschwenkbar an dem Befestigungsteil (2) angebundene Greifarme (3), welche zum Halten des Behälters (6) in eine geschlossenen Position bringbar sind und welche zum Einführen und Entnehmen des Behälters (6) in eine geöffnete Position bringbar sind, wobei zwischen den Greifarmen (3) ein vorgespannter elastischer Bügel (4) angeordnet ist und der elastische Bügel (4) in eine erste Lage, in welcher sich die Greifarme (3) in der geöffneten Position befinden, und in eine zweite Lage, in welcher sich die Greifarme (3) in der geschlossenen Position befinden, bringbar ist,
**dadurch gekennzeichnet, dass**
die Vorspannung des elastischen Bügels (4) in der ersten Lage die Greifarme (3) in der geöffneten Position hält und die Vorspannung des elastischen Bügels (4) in der zweiten Lage die Greifarme (3) in der geschlossenen Position hält.

2. Haltevorrichtung (1) gemäß Anspruch 1, **dadurch gekennzeichnet, dass** die erste und die zweite Lage stabile Lagen sind, wobei der elastische Bügel (4) bei einer elastischen Verformung aus einer der beiden Lagen in Richtung der jeweils anderen Lage bei einem Überschreiten eines bestimmten Umschwenk-Verformungsgrads selbstständig in die jeweils andere Lage gelangt.

3. Haltevorrichtung (1) gemäß Anspruch 1 oder 2, **dadurch gekennzeichnet, dass** der elastische Bügel (4) in der ersten Lage in einer ersten Vorspannrichtung (44) vorgespannt ist und in der zweiten Lage in einer zweiten Vorspannrichtung (46) vorgespannt ist, wobei die erste Vorspannrichtung (44) und die zweite Vorspannrichtung (46) in im Wesentlichen entgegengesetzte Richtungen weisen.

4. Haltevorrichtung (1) gemäß einem der vorstehenden Ansprüche, **dadurch gekennzeichnet, dass** der elastische Bügel (4) in Form einer Feder, bevorzugt einer Schnappfeder, besonders bevorzugt einer Blattfeder, bereitgestellt ist.

5. Haltevorrichtung (1) gemäß einem der vorstehenden Ansprüche, **dadurch gekennzeichnet, dass** jeweils ein Anbindungsbereich (42) zwischen dem Befestigungsteil (2) und jeweils einem Greifarm (4) vorgesehen ist, wobei der Anbindungsbereich (42) Teil des elastischen Bügels (4) ist.

6. Haltevorrichtung (1) gemäß Anspruch 5, **dadurch gekennzeichnet, dass** der Anbindungsbereich (42) zwischen dem Befestigungsteil (2) und einem Greifarm (3) jeweils über einen biegeweichen Steg, bevorzugt im Form eines Filmgelenks bereitgestellt ist.

7. Haltevorrichtung gemäß Anspruch 5 oder 6, **dadurch gekennzeichnet, dass** der elastische Bügel (4) mit den Anbindungsbereichen (42) und dem Befestigungsteil (2) einen Rahmen (5) ausbildet, bevorzugt einen durchgehenden Rahmen (5), wobei bevorzugt eine durch den Rahmen (5) gebildete Ausnehmung (50) umschlossen ist.

8. Haltevorrichtung (1) gemäß einem der Ansprüche 5 bis 7, **dadurch gekennzeichnet, dass** das Befestigungsteil (2), die Greifarme (3), die Anbindungsbereiche (42) und der elastische Bügel (4) einstückig ausgebildet sind.

9. Haltevorrichtung (1) gemäß Anspruch 8, **dadurch gekennzeichnet, dass** der in der Haltevorrichtung (1) gehaltene Behälter (6) durch den elastischen Bügel (4) und die zwei Greifarme (3) gehalten ist, wobei bevorzugt der elastische Bügel (4) und jeder der Greifarme (3) jeweils genau einen Kontaktbereich (60) mit dem gehaltenen Behälter (4) ausbilden.

10. Haltevorrichtung (1) gemäß einem der vorstehenden Ansprüche, **dadurch gekennzeichnet, dass** die elastische Verformung zum Verformen des elastischen Bügels (4) aus der ersten Lage in die zweite Lage durch eine direkte Krafteinwirkung auf den elastischen Bügel (4) bewirkbar ist.

11. Haltevorrichtung (1) gemäß einem der vorstehenden Ansprüche, **dadurch gekennzeichnet, dass** die elastische Verformung zum Verformen des elastischen Bügels (4) aus der zweiten Lage in die erste Lage durch ein über die Greifarme auf den elastischen Bügel (4) wirkendes Biegemoment bewirkbar ist.

12. Haltevorrichtung (1) gemäß einem der vorstehenden Ansprüche, **dadurch gekennzeichnet, dass** der zu haltende Behälter (6) als Aktuator zum Wechseln zwischen der geschlossenen Position zum Halten des Behälters (6) und der geöffneten Position zum Ein- und Ausführen eines Behälters (6) dient, wobei der Behälter (6) bevorzugt zum Schließen der Greifarme (3) gegen den elastischen Bügel (4) geschoben werden kann und zum Öffnen der Greifarme (3) aus der Haltevorrichtung (1) gezogen werden kann.

## Claims

1. Holding device (1) for holding a container (6) in a transport device of a beverage filling plant, comprising a fastening part (2) and two gripping arms (3) which are pivotably connected to the fastening part (2) and can be brought into a closed position in order to hold the container (6) and can be brought into an open position in order to insert and remove the container (6), wherein a preloaded elastic bow (4) is arranged between the gripping arms (3) and the elastic bow (4) can be brought into a first position in which the gripping arms (3) are in the open position, and into a second position in which the gripping arms (3) are in the closed position,
**characterised in that**
the preload of the elastic bow (4) in the first position holds the gripping arms (3) in the open position and the preload of the elastic bow (4) in the second position holds the gripping arms (3) in the closed position.

2. Holding device (1) according to claim 1, **characterised in that** the first and the second position are stable positions, wherein the elastic bow (4), when elastically deformed from one of the two positions in the direction of the other position, automatically enters the other position when a certain degree of swing-over deformation is exceeded.

3. Holding device (1) according to claim 1 or 2, **characterised in that** the elastic bow (4), in the first position, is preloaded in a first preload direction (44) and, in the second position, is preloaded in a second preload direction (46), wherein the first preload direction (44) and the second preload direction (46) point in substantially opposite directions.

4. Holding device (1) according to any of the preceding claims, **characterised in that** the elastic bow (4) is provided in the form of a spring, preferably a snap spring, most preferably a leaf spring.

5. Holding device (1) according to any of the preceding claims, **characterised in that** in each case a connecting area (42) is provided between the fastening part (2) and in each case a gripping arm (4), wherein the connecting area (42) is part of the elastic bow (4).

6. Holding device (1) according to claim 5, **characterised in that** the connecting area (42) between the fastening part (2) and a gripping arm (3) is provided in each case via a flexible web, preferably in the form of a film joint.

7. Holding device according to claim 5 or 6, **characterised in that** the elastic bow (4) forms, with the connecting areas (42) and the fastening part (2), a frame (5), preferably a continuous frame (5), wherein preferably a recess (50) formed by the frame (5) is enclosed.

8. Holding device (1) according to any of claims 5 to 7, **characterised in that** the fastening part (2), the gripping arms (3), the connecting areas (42) and the elastic bow (4) are formed as a single piece.

9. Holding device (1) according to claim 8, **characterised in that** the container (6) held in the holding device (1) is held by the elastic bow (4) and the two gripping arms (3), wherein the elastic bow (4) and each of the gripping arms (3) in each case preferably form precisely one area of contact (60) with the held container (4).

10. Holding device (1) according to any of the preceding claims, **characterised in that** the elastic deformation for deforming the elastic bow (4) from the first position into the second position can be effected by a direct application of force to the elastic bow (4).

11. Holding device (1) according to any of the preceding claims, **characterised in that** the elastic deformation for deforming the elastic bow (4) from the second position into the first position can be effected by a bending moment acting on the elastic bow (4) via the gripping arms.

12. Holding device (1) according to any of the preceding claims, **characterised in that** the container (6) to be held serves as an actuator for switching between the closed position for holding the container (6) and the open position for inserting and removing a container (6), wherein the container (6) can preferably be pushed against the elastic bow (4) in order to close the gripping arms (3) and pulled out of the holding device (1) in order to open the gripping arms (3).

## Revendications

1. Dispositif de maintien (1) pour maintenir un récipient (6) dans un dispositif de transport d'une installation de remplissage de boissons, comprenant une partie de fixation (2) et deux bras de préhension (3) reliés de manière pivotante à la partie de fixation (2), lesquels peuvent être amenés dans une position fermée pour maintenir le récipient (6) et lesquels peuvent être amenés dans une position ouverte pour introduire et retirer le récipient (6), dans lequel un étrier élastique précontraint (4) est disposé entre les bras de préhension (3) et l'étrier élastique (4) peut être amené dans une première position, dans laquelle les bras de préhension (3) se trouvent dans la position ouverte, et dans une seconde position, dans laquelle les bras de préhension (3) se trouvent dans la position fermée,
**caractérisé en ce**
**que** la précontrainte de l'étrier élastique (4) dans la première position maintient les bras de préhension (3) dans la position ouverte et la précontrainte de l'étrier élastique (4) dans la seconde position maintient les bras de préhension (3) dans la position fermée.

2. Dispositif de maintien (1) selon la revendication 1, **caractérisé en ce que** la première et la seconde position sont des positions stables, dans lequel l'étrier élastique (4), lors d'une déformation élastique à partir d'une des deux positions en direction de l'autre position respective, parvient automatiquement dans l'autre position respective lors d'un dépassement d'un certain degré de déformation par basculement.

3. Dispositif de maintien (1) selon la revendication 1 ou 2, **caractérisé en ce que** l'étrier élastique (4) est précontraint dans la première position dans une première direction de précontrainte (44) et est précontraint dans la seconde position dans une seconde direction de précontrainte (46), dans lequel la première direction de précontrainte (44) et la seconde direction de précontrainte (46) sont orientées dans des directions sensiblement opposées.

4. Dispositif de maintien (1) selon l'une quelconque des revendications précédentes, **caractérisé en ce que** l'étrier élastique (4) est prévu sous forme d'un ressort, de préférence un ressort à déclic, le plus préférentiellement un ressort à lames.

5. Dispositif de maintien (1) selon l'une quelconque des revendications précédentes, **caractérisé en ce qu'**une zone de liaison (42) est respectivement prévue entre la partie de fixation (2) et respectivement un bras de préhension (4), dans lequel la zone de liaison (42) fait partie de l'étrier élastique (4).

6. Dispositif de maintien (1) selon la revendication 5, **caractérisé en ce que** la zone de liaison (42) est prévue entre la partie de fixation (2) et un bras de préhension (3) respectivement par l'intermédiaire d'une traverse flexible, de préférence sous forme d'une articulation en film.

7. Dispositif de maintien selon la revendication 5 ou 6, **caractérisé en ce que** l'étrier élastique (4) forme un cadre (5) avec les zones de liaison (42) et la partie de fixation (2), de préférence un cadre continu (5), dans lequel de préférence un évidement (50) formé par le cadre (5) est entouré.

8. Dispositif de maintien (1) selon l'une quelconque des revendications 5 à 7, **caractérisé en ce que** la partie de fixation (2), les bras de préhension (3), les zones de liaison (42) et l'étrier élastique (4) sont formés d'un seul tenant.

9. Dispositif de maintien (1) selon la revendication 8, **caractérisé en ce que** le récipient maintenu (6) dans le dispositif de maintien (1) est maintenu par l'étrier élastique (4) et les deux bras de préhension (3), dans lequel de préférence l'étrier élastique (4) et chacun des bras de préhension (3) forment chacun exactement une zone de contact (60) avec le récipient maintenu (4).

10. Dispositif de maintien (1) selon l'une quelconque des revendications précédentes, **caractérisé en ce que** la déformation élastique pour déformer l'étrier élastique (4) de la première position à la seconde position peut être provoquée par une action de force directe sur l'étrier élastique (4).

11. Dispositif de maintien (1) selon l'une quelconque des revendications précédentes, **caractérisé en ce que** la déformation élastique pour déformer l'étrier élastique (4) de la seconde position à la première position peut être provoquée par un moment de flexion agissant sur l'étrier élastique (4) par l'intermédiaire des bras de préhension.

12. Dispositif de maintien (1) selon l'une quelconque des revendications précédentes, **caractérisé en ce que** le récipient à maintenir (6) sert d'actionneur pour basculer entre la position fermée de maintien du récipient (6) et la position ouverte d'introduction et de sortie d'un récipient (6), dans lequel le récipient (6) peut de préférence être poussé contre l'étrier élastique (4) pour fermer les bras de préhension (3) et être retiré du dispositif de maintien (1) pour ouvrir les bras de préhension (3).
